# EUROPEAN PATENT SPECIFICATION

(11) **EP 1 414 291 B1**
(45) Date of publication and mention of the grant of the patent: **07.06.2006**
(21) Application number: 01982945.6
(22) Date of filing: 24.10.2001
(51) Int. Cl.: A01K 45/00, A01K 41/00, A01K 31/19

(54) **METHOD OF PRODUCING AND REARING POULTRY, AS WELL AS HATCHER ARRANGEMENT AND POULTRY FARM FOR EXECUTING THE METHOD**
VERFAHREN ZUM ERZEUGEN UND ZÜCHTEN VON GEFLÜGEL, SOWIE EINE SCHLUPFANLAGE UND HÜHNERFARM ZUR AUSFÜHRUNG DES VERFAHRENS
PROCEDE DE PRODUCTION ET D'ELEVAGE AVICOLE, AINSI QUE SYSTEME DE COUVOIR ET EXPLOITATION AVICOLE PERMETTANT L'EXECUTION DE CE PROCEDE

(30) Priority: 25.10.2000 NL 1016479
(43) Date of publication of application: 06.05.2004
(73) Proprietor: Vencomatic B.V., 5521 DZ Eersel (NL)
(72) Inventor: Kuijpers, Cornelius Johannes Maria, 5556 XS Valkenswaard (NL); Kuijpers, Paulus Hendrik Maria, 5763 PZ Milheeze (NL); Kuijpers, Marcelinus Wilhelmus Maria, 5473 VZ Heeswijk-Dinther (NL)
(74) Representative: Bartelds, Erik
(86) International application number: PCT/NL2001/000777
(87) International publication number: WO 2002/034039

(56) References cited:
- EP-A- 0 670 111
- DE-U- 9 108 764
- GB-A- 924 217
- DATABASE WPI Week 198038 Derwent Publications Ltd., London, GB; AN 1980-j2072c XP002168071 & SU 713 723 A (GOL SP K B AVTOPOGRUZCHIKAM), 8 February 1980 (1980-02-08)

## Description

The invention relates to a method of producing and rearing poultry as described in the introductory part of claim 1. Such a method is generally known.

In a country like The Netherlands, according to the brochure "Poultry farming in the Netherlands" issued by the Agriculture Ministry, Trade and Industry Department, November 1997, 900 million fertilized hen's eggs are produced every year, approximately half of which are exported. The fertilized eggs are transported to special brooding establishments and are brooded there in a first brooding or setting phase and a successive second brooding or hatching stage in special hatcher arrangements, the brooding product of the brooding establishments consisting of so-called day-old chicks which are also partly exported. The day-old chicks are taken by specially equipped means of transport such as trucks and airplanes to their final destination, the poultry farms where the day-old chicks are reared in poultry farming barns.

According to current practice the eggs are marked by a stamp, which specifies the parent animal-rearing establishment and thus indicates the origin of the egg. At the brooding establishment the eggs are set for about 18 days in a setting machine. After this setting period the eggs are transferred to a hatcher arrangement in which they hatch after about 21 days. The day-old chicks are then removed from the hatcher arrangement and the eggshells and the non-hatched eggs are separated from the chicks.. The poultry farming establishments purchasing the day-old chicks can be distinguished into broiler farms and laying hen farms. So far chickens, chicken farms and hen's eggs have been discussed and also in the course of the description the chicken sector of the poultry farming branch will be discussed for convenience, but the invention also extends to other kinds of poultry, for example ducks, turkeys etc.

The moment of hatching of the eggs at the brooding establishments may vary. Depending on the quality of the eggs and on the hatching process, there may be a difference of sometimes up to three days in practice. Thus after hatching, the early-hatched chicks still remain in the hatcher arrangement for some time, even up to three days, under conditions that are especially suitable for hatching and less for the hatched chicks. The hatched chicks do not have water and feed at their disposal. The loss of weight of the chicks between hatching and the emptying of the hatcher arrangement may amount to 20% of the chick's weight. This is clearly a disadvantage, because this directly leads to a number of chicks lagging behind, which may possibly not be completely made good during the next rearing period at the poultry farm.

A further disadvantage of the prior art is that as a result of the large density of the number of eggs per unit of volume in the hatcher arrangement, the heat dissipation of the eggs is problematic, so that there is a chance of the eggs being overheated, leading to a loss of quality. The cooling of the eggs is a problem because of the high density and extra energy costs involved.

A further problem is that it is impossible to trace the origin of the day-old chicks. The stamp on the egg is separated from the chick together with the eggshell. This is undesirable in view of the desired traceability of the origin of poultry in the production chain. In some sectors of the livestock breeding industry, such as, for example, in pig farming, the traceability of the origin of cattle is nowadays monitored by the authorities and must be strictly adhered to so as to be able to avoid and effectively combat epidemics such as foot and mouth disease. For the poultry sector too this traceability becomes ever more important.

In the final stage of the hatching much dust (down) comes free. There is a great chance via this down to have cross-infections showing up in a poultry farm with bacteria and viruses between chicks of different origins. Quantities of eggs from different origins daily hatch in the hatcher arrangement. In the setting phase this problem obviously shows up much less, because the chicks are still in the protective eggshell.

It is an object of the invention to provide a method of producing and rearing poultry in which the loss of weight of the newly hatched chicks can be avoided, less energy is necessary for the brooding of the eggs, the origin of the chicks is traceable and there is less chance of uncontrolled spreading of diseases between chicks of different origins. For this purpose a method of the type defined in the introductory paragraph according to the invention has the characteristic features as defined in the characterizing part of claim 1.

The invention particularly relates to the final phase of the hatching of the eggs and the beginning of the rearing period. The set eggs which become the brooding product with the method according to the invention are transported to the poultry farm by transport means specially equipped for this purpose, such as trucks whose cargo spaces are temperature controlled. At the poultry farm the set eggs are placed in a hatcher arrangement intended for this purpose, in which the eggs hatch and thus the chicks are born. Immediately after birth the chick can commence with an initial phase of the rearing period inside the hatcher arrangement.

An embodiment of the invention as claimed in claim 2 may be used to advantage. Not only are the set eggs of certain, traceable origin because of the presence of the stamp, but according to this embodiment people from the poultry farm are enabled to place eggs in the various hatcher arrangements from different selected origins, so that the chicks from these different origins can be kept separated from each other as desired, not only during hatching, but also during rearing.

A following preferred embodiment of the invention is characterized in claim 3. In this embodiment the newly hatched chicks already directly have access to feed and water, so that loss of weight need not occur and the initial phase of the rearing period commences already immediately, still in the hatcher arrangement. At a certain moment it is possible for the chicks already during the initial rearing period to leave the hatcher arrangement and go into the barn of the poultry : farm and eat and drink there too and return, as desired, to the warmer and more secure environment of the hatcher arrangement, which in a way functions as an artificial chick mother, which benefits the well-being of the chicks.

For example, the advantageous method as claimed in claim 4 is applied. The hatcher arrangement implementing the method according to the invention consists of an altogether different kind of hatcher arrangement than is used in the brooding establishments known from the state of the art. The hatcher arrangement is placed with the open under side on the floor of the barn of the poultry farming barn. In poultry farms it is customary to place strips of material such as strips of paper underneath the feed containers in poultry farming barns and scatter feed over the strips of paper on the floor, because the chicks are not yet fully capable of pecking feed from the normal feed saucers at the beginning of the rearing period. This is utilized in this embodiment of the method according to the invention to enable the newly hatched chicks to directly peck feed from the paper strips once they have hatched. It is advantageous, in accordance with the embodiment already discussed above, to at least slightly open the hatcher arrangement placed on the floor of the poultry farming barn, so that the chicks can also walk outside the hatcher arrangement over the floor of the barn and can eat and drink there.

For drinking purposes water pipes are present in known poultry farming barns, which pipes have drinking nipples. According to a following advantageous embodiment of the invention, one or more of these water pipes are led through the hatcher arrangement which is placed on the floor of the poultry farming barn, so that the hatched chicks can drink water from drinking nipples as early as inside the hatcher arrangement.

Also a following embodiment of the invention which is described in claim 6 is advantageous. At a poultry farm, different to the conventional special brooding establishments, it is not necessary to place the set eggs close together in the hatcher arrangement with a view to saving space. New chicks at a poultry farm are always taken to a previously intensively cleaned empty barn of the poultry farm where the floor has been covered with new litter such as wood shavings and the new above-mentioned strips of paper have been put underneath the feed saucers. If the hatcher arrangement is placed on the floor of the barn, there will thus be much room left inside the barn, which is empty for the rest. But also in other embodiments of the invention, in which the hatcher arrangement is not placed on the floor of the barn, there will never be so many eggs present for hatching, that they cannot be spaced wider from each other than is customary in the hatcher arrangements of the known brooding establishments. During the hatching operation the eggs themselves generate heat. The density of the eggs in the hatcher arrangement is now chosen so that the heat losses from the hatcher arrangement have a relation with the overall heat generation of the eggs present. For example, care is taken that cooling is never needed, but always some additional heating is. All sorts of devices may be applied for this purpose, for each individual hatcher arrangement or for a number of hatcher arrangements together.

The invention also relates to a hatcher arrangement. Hatcher arrangements are known per se, e.g. from DE-U-9108764. This prior art document discloses a multifunctional unit comprising a housing with various elements that allow the unit to serve either as a brooder, as a hatcher, as a rearing box, as a healer plate and even as a plant growing box. In this prior art unit, however, these functions cannot be performed at the same time, but require the unit to be transformed by removal or replacement of some of these elements. For instance when after brooding in this unit the eggs have hatched, it has to be transformed for rearing the chicks by removing an egg rolling mechanism, reversing a U-shaped floor and installing a feeding console.

The invention now has for its object to provide a hatcher arrangement that is specifically adapted for executing the method described above and with which a relative large number of eggs may efficiently be hatched in a relatively small space, while still providing sufficient spacing of the eggs and favourable conditions for initial rearing of hatched chicks. In accordance with the invention, this is achieved in a hatcher arrangement as defined in claim 7.

This type of hatcher arrangement could be placed in a separate room away from the barn, in which room the chicks then hatch and spend the initial phase of the rearing period. Not until then could the chicks be permanently transferred to one or more barns of the poultry farm- With a hatcher arrangement of this type it would also be possible to make provisions for enabling the hatched chicks to leave the hatcher arrangement during the initial rearing phase and return thereto again.

The hatcher arrangement of the present invention may have one or more features as defined in claims 8 to 11. By providing feed and water, heating and/or ventilation, the well-being of the hatched chicks during the first few days of rearing is improved, which in turn leads to better development and growth.

Such a hatcher arrangement may have the characteristic feature which is described in claim 12. The hatcher arrangement may then be of the type discussed previously, which is placed on the floor of the hatchery barn. When the hatcher arrangement is no longer used, because all the chicks have hatched, it is removed from the barn in order Lo be cleaned, disinfected and prepared for again inserting therein set eggs coming from a brooding establishment. The cleaned and disinfected hatcher arrangement can be kept at an intermediate storage place for a certain period of time, as desired.

Transport means are provided for transporting the set eggs from a brooding establishment to a poultry farm. So far the product of the brooding establishments has consisted of day-old chicks. Different requirements are posed on the transport means for the transport of set eggs, because, when the method according to the invention is implemented, it is of the utmost importance for the brooding process not to be interrupted or affected-If desired, a special transport means can be used, the importance of which will become evident from the following discussion of the drawings.

Finally, the invention also relates to a poultry farm having at least one barn for hatching chicks, the barn comprising the means required for implementing the method according to the invention. Such a poultry farm according to the invention has the characteristic features as described in the characterizing part of claim 13.

The novel method according to the invention has meanwhile been gained experience with on a small scale and has yielded surprisingly good results. There is no fixed concept yet of the question as to how a poultry farm that implements the method according to the invention is to be equipped and arranged in detail. The means summed up in claim 12 should be available at poultry farms, which is different from that which used to be customary at poultry farms. This means that there is clearly a structural divide between a poultry farm according to the invention and the present poultry farms, albeit it will obviously be possible to use a large part of the means, buildings and machinery of the known poultry farms.

Summarizing it may be observed that the advantages of the method, a hatcher arrangement, a transport means and a poultry farm according to the invention are at least the following:
- There is less loss of weight of the chicks; at the start of the rearing period and thus at the start of their productive lives the chicks have20% more weight than has been customary to date. It is not implausible that the chicks are healthier too.
- The performance of the chicks in the hatching phase is considerably better than before, because the chicks are born in the environment where there is also the initial rearing period and the chicks in consequence experience fewer climatic fluctuations in their vulnerable initial phase.
- The identification of the chicks via the stamp on the eggshell is possible, because at the poultry farm the shell is still around the chick prior to the chick's hatching. The number of cross-infections by microorganisms can be strongly reduced by the method according to the invention, because the chicks do not come into contact with dust and down of chicks of unknown origin.
- It has also turned out that the hatching percentage as well as the quality of the chicks are higher with the method according to the invention as a result of the better heat regulation of the eggs during the hatching phase.
- A considerable saving of energy can be realized by reducing the egg density in the hatcher arrangement compared with the currently used system, so that no or less cooling is required.
- After the chicks have hatched, a further saving of energy is realized, because then the chick density during the initial rearing phase in the hatcher arrangement, that is to say, the number of chicks per unit of volume, is larger compared with the chick density in a barn of the poultry farm. This reduces the cost of heating during the initial rearing phase.

The invention will now be explained solely by way of non-limitative example with reference to the drawings in which:
Fig. 1 is a diagrammatic representation of the organization of the industrial column in traditional industrial brooding establishments;
Fig. 2 is a diagrammatic perspective view, not to scale, of part of a barn of a poultry farm, in which a pair of hatcher arrangements according to the invention are placed in accordance with the invention,
Fig. 3 is a diagrammatic cross section of a hatcher arrangement of the type as shown in Fig. 2, and
Fig. 4 is a diagrammatic view of a hatcher arrangement according to another embodiment.

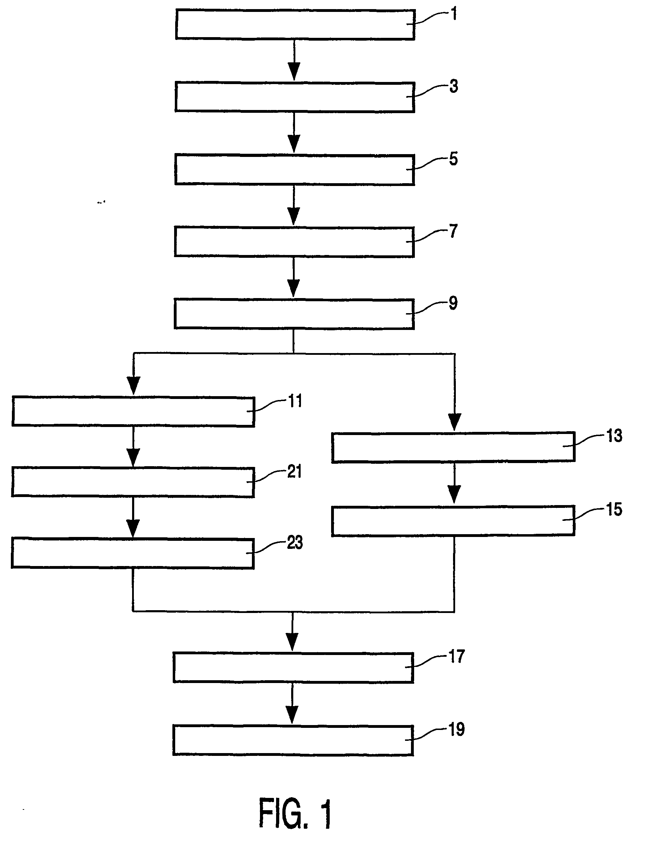

The industrial column of Fig. 1 comprises a number of stages. The beginning is formed by the basic rearing establishments 1. The basic rearing establishments of the laying hen and broiler races are distributed over various countries. Some of them exclusively deal with rearing laying hens, some exclusively with rearing broiler parent animals and some with rearing the two types of animals.

The eggs of the rearing farms 1 are transported to brooding establishments 3 which produce so-termed day-old chicks which are subsequently transferred to rearing farms 5. These rearing farms 5 supply to farms 7, a number of which keep laying hen parent animals and others keep broiler parent animals. Actually, in both sectors there are parent animals as well as greatparent animals. The rearing establishments produce fertilized eggs which are laid by the mother animals, are collected and are individually provided with a stamp which specifies the parent animal farm. The fertilized eggs of the rearing establishments 7 are transported to brooding establishments 9 which usually produce for both the laying hen sector and the broiler sector. In brooding establishments the eggs are hatched into so-termed day-old chicks in brooding arrangements under controlled conditions, which day-old chicks are then supplied to laying hen rearing establishments 11 and broiler rearing establishments 13. These two types of establishments are denoted by the common name of poultry farms in the claims in the present description for convenience.

The broiler rearing establishments 13 produce broilers which are transported to slaughterhouses 15 and subsequently end up at the consumer 19 through the retail trade 17. The product of the laying hen rearing establishments 11 is transported to laying hen farms 21 whose products in this case comprise consumer eggs which are transported to packing stations and the egg processing industry 23. The products of the laying hen farms also end up with the customers 19 through the retail trade 17.

The application of the invention changes the industrial column of Fig. 1 only insofar that the brooding establishments 3 and/or 9 no longer have, or no longer solely have, day-old chicks as a brooding product, but set eggs, or also set eggs. The rearing farms 5, the laying hen rearing establishments 11 and the broiler rearing establishments 13 then comprise establishments of which at least a number are geared to implementing the method according to the invention and thus purchase set eggs from the brooding establishments, place them in a hatcher arrangement and let the set eggs hatch under controlled conditions, so that the chicks are born in the hatcher arrangements at the poultry farms and the rearing of the chicks can be directly commenced in an initial phase of the rearing period.

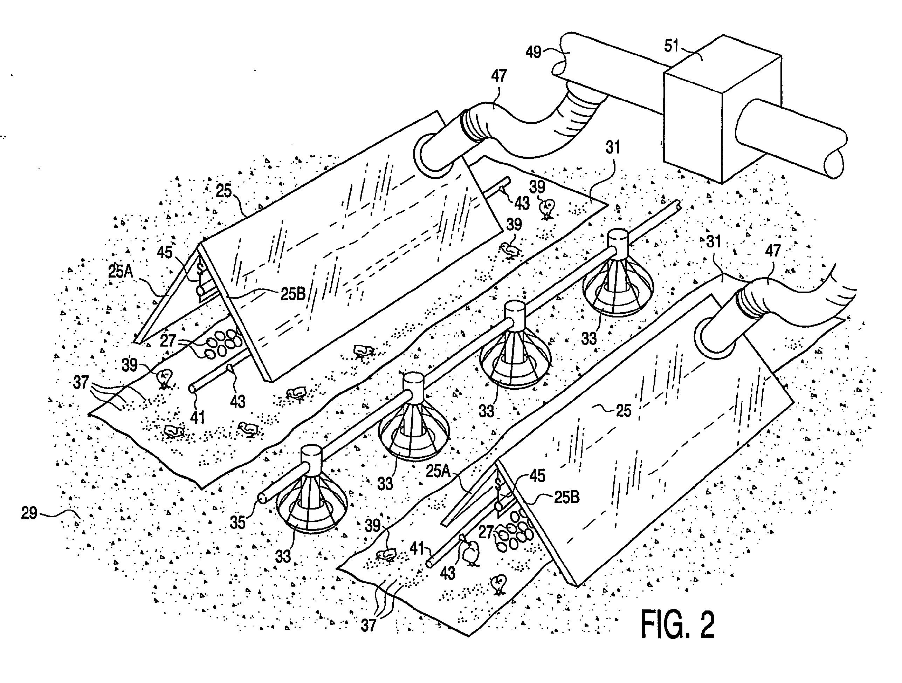

Fig. 2 schematically shows as an example of a method according to the invention a part of a poultry farming barn of a poultry farm, which poultry farming barn is prepared for taking in a new batch of chicks. In the first instance, however, not day-old chicks coming from a brooding establishment are placed in the hatchery barn, as used to be done in the past, but one or more hatcher arrangements 25 are erected in the barn in which arrangement set eggs 27 are positioned. The floor of the barn is covered with litter 29 such as wood shavings on which in conventional way a number of strips of so-called chick paper 31 are laid down. Some feed is scattered over the strips of chick paper also in the conventional way. Between the strips of chick paper the drawing shows a number of the conventional feed saucers 33 for chicks, which are connected to a tube 35 for supplying feed to the feed saucers 33.

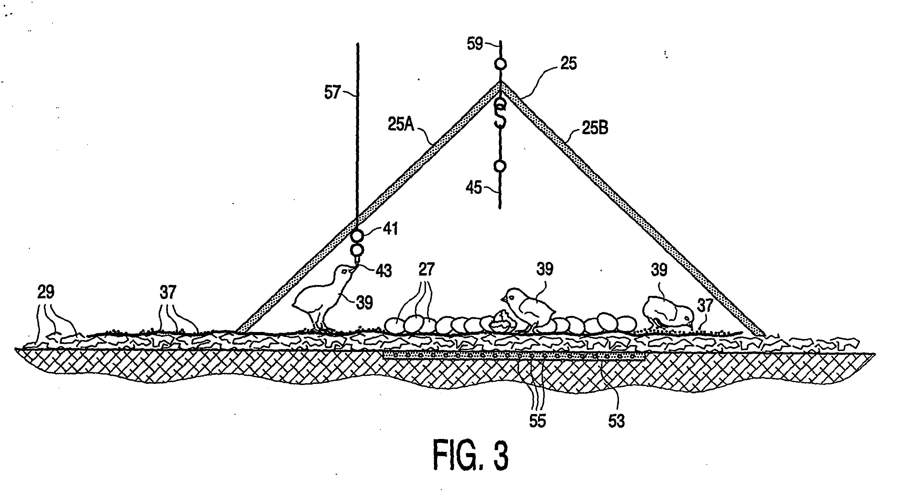

The hatcher arrangements 25 comprise translucent panels 25A and 25B which are placed together as a pitched roof, so that a shielded space of triangular section arises as shown in Fig. 3, which is covered by the panels 25A and 25B. The panels 25A and 25B provide the necessary heat insulation. They may comprise, for example, double-walled panels of glass or plastic. The length of the hatcher arrangements thus formed can be adjusted to the needs and may be equal to approximately the length of the poultry farming barn. The hatcher arrangements can stay in the barn after the initial rearing period and be removed from the floor in that they are suspended from the ceiling. The hatcher arrangements 25 are preferably movable and may be set up as a whole, for example, after some feed 37 has been scattered on the chick paper and the eggs 27 have been put on the chick paper. Another possibility is to interconnect the loose panels 25A and 25B to form the hatcher arrangements, after the feed has been scattered and the set eggs have been laid down. The advantage of movable hatcher arrangements is inter alia, that they can be removed from the barn after the initial rearing phase, and be used again in another barn for a new batch of set eggs. In this way the investments in hatcher arrangements are used up efficiently.

At the head end the hatcher arrangements can be shut off completely or in part by suitable means not shown in the drawing, such as further panels or foil or similar material in view of maintaining the right climate, that is to say, the right temperature inside the hatcher arrangements.

Fig. 2 shows that a number of chicks 39 have already hatched. In that case the hatcher arrangements at the head end or elsewhere can be partly opened to enable the chicks 39 to leave the hatcher arrangements and go outside and peck some food from the part of the chick paper 31 that extends beyond the hatcher arrangements.

As soon as the chicks 39 feel the need to do so, they can again withdraw to the warmer, more sheltered area inside the hatcher arrangements. The hatcher arrangements then perform the role of artificial "chick mothers" during the time when not yet all the eggs 27 have hatched and also some time after that, so that the newly hatched chicks in the initial rearing period experience more a sense of security than the day-old chicks that are born in a traditional brooding establishment.

Water pipes 41 run through the hatcher arrangements, which pipes have drinking nipples only indicated very diagrammatically by 43 and which are positioned above the strips of chick paper 31, so that the chicks can drink therefrom. Furthermore, heating elements 45 with hot water running through them for heating the interior of the hatcher arrangements run through the hatcher arrangements 25. Fig. 2 also shows a ventilation/heating system comprising flexible air hoses 47 which are connected to a pipe system 49 which is present in the barn and which may comprise an arrangement 51 for transporting and/or heating the circulated air. This air circulation system, possibly combined with air heating, is represented in the drawing merely very summarily and diagrammatically and may be arranged in an arbitrary way known from the state of the art, such as, for example, by individual air fans for each hatcher arrangement, etc.

Not shown in Fig. 2 either is the measuring and control equipment for conditioning the circumstances inside the hatcher arrangements 25 in which the eggs 27 are hatched and where the chicks are located which are already born. These arrangements too may, however, be of a conventional type and be adjusted to the needs. The density with which the set eggs 27 are placed in the hatcher arrangement 25 may advantageously be tuned to the heat generation of the eggs themselves in relation to the heat losses of the hatcher arrangement. It will often be necessary to install a heating system underneath the set eggs 27. Fig. 3 shows, solely by way of non-limitative example, that such heating could comprise an electrically heated egg bed 53 through which electric heating wires 55 are led. However, it is possible to provide completely different heating provisions underneath the set eggs 27, which provisions are heated by water, a different liquid, or air. As may also be seen in Fig. 3, the water pipes 41, which are available anyway in barns of a poultry farm, are suspended from wires 57 and so are the heating elements 45 by means of suspension wires 59. The suspension wires 57 and 59 are not shown in Fig. 2 for convenience.

The eggs 27 have been set in a setting facility in a brooding establishment for about 18 days. In the hatcher arrangements 25 the set eggs 27 are then hatched at the poultry farm in about 21 days. Immediately after the chicks have hatched inside the hatcher arrangements 25, they already have both water through drinking nipples 43 and scattered feed 37 on the strips of chick paper 31 at their disposal. No later than shortly after the chicks are born are the "chicken mothers" opened completely or in part at the head ends or somewhere else, so that the chicks can start making use of the rest of the barn.

When, at a certain point of time, the hatcher arrangements are no longer needed, they can be removed from the hatchery barn to be used in another barn or to be kept in a storage room outside the barn to be reused in due course and erected inside a cleaned and prepared barn of the poultry farm for a new batch of set eggs to hatch.

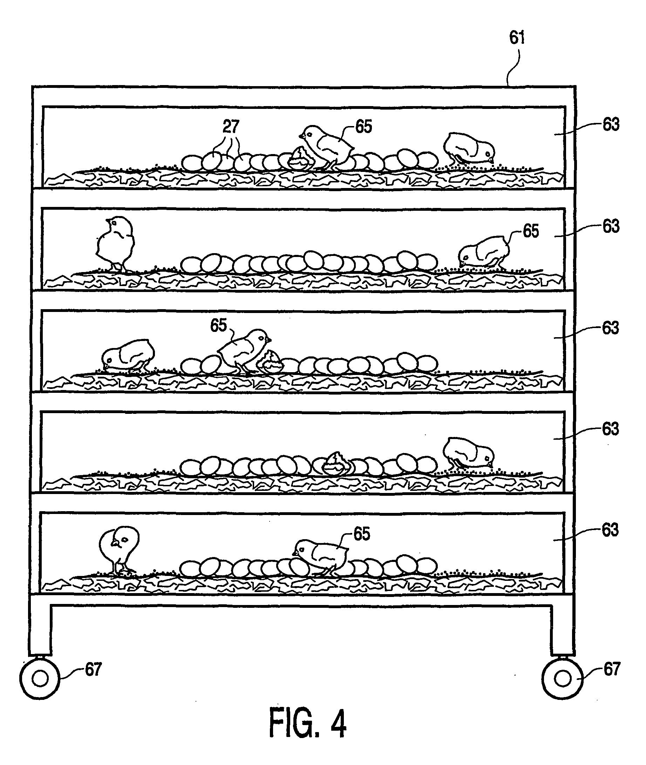

Fig. 4 diagrammatically shows a possible other embodiment for the hatcher arrangements according to the invention. In this case a hatching unit referred to by the general reference numeral 61 is present, which comprises five hatcher arrangements 63 in tiers above one another. The hatcher arrangements 63 are shown with set eggs 27 as well as hatched chicks 65 in the upper two hatcher arrangements. It is not shown that water and feed are available in the hatcher arrangements 63 for the chicks 65 and that the chicks 65 may temporarily leave the hatcher arrangements as desired, each on its own tier, and return thereto again, if desired. The hatching unit 61 is movable and has wheels 67 for this purpose. This makes it possible for the hatching to take place in a room provided for this purpose, which could have special facilities such as a temperature control installation etc. for the hatching of the eggs. At a certain moment the hatcher arrangements 63 can be removed from the hatching unit 61 to take the hatched chicks to the poultry farming barns prepared for this purpose, after which the hatchers can be cleaned, disinfected and further prepared for again receiving set eggs.

The set eggs can be supplied by special means of transport, such as trucks which are equipped with means which are suitable for transporting set eggs under conditions in which the brooding process is not interrupted. One may consider suitable provisions for the set eggs not to be shaken excessively, and also temperature control in the cargo space suitable for the set eggs may be considered. It would be conceivable that the hatching unit 61 is transported from the brooding establishment to the poultry farm as a container filled with set eggs by a transport means suitable for this purpose. Other containers too may be conceivable, such as containers containing a plurality of hatching units 61. A possibility would be to connect the delivered containers at the poultry farm to provisions such as lighting facilities, water facilities, climate control installations etc., so that the hatching can take place in the container itself. Optionally, the container could contain hatcher arrangements which, upon delivery, are taken to the prepared barns of the poultry farm and are laced on the floor there.

The poultry farm where the hatcher arrangements are used is fully equipped for the implementation of the method according to the invention and the use of the hatcher arrangements according to the invention. Such a poultry farm is not shown in the drawing and is equipped with the means as claimed in claim 13 and other or further means for efficient hatching and chick rearing.

Albeit the invention has been explained above with reference to several examples of embodiment of the invention, the invention is by no means restricted to the embodiments given, but, instead, extends to all inventions conceivable within the scope of the appended claims.

Summarizing, the advantages of the invention may be summed up as follows:
- There is less loss of weight, at the start of their productive lives the chicks have 20% more weight than with the traditional methods.
- The performance of the chicks in the hatchery phase is considerably better than before, because the chicks are born in their own environment and in consequence experience fewer climatic fluctuations in their vulnerable initial phase.
- The identification of the chicks via the stamp on the eggshell is possible because the shell is still around the chick when the set eggs are delivered to the poultry farm. The number of cross-infections by microorganisms can be strongly reduced by the method according to the invention, because the chicks do not come into contact with dust and down of chicks of different origin.
- It has also turned out that the hatching percentage as well as the quality of the chicks are higher with the method according to the invention, most probably as a result of the better heat regulation of the space in which the eggs hatch.
- A considerable saving of energy can be realized by reducing the egg density in the hatcher arrangement compared with the currently used system, so that no or less cooling is required.
- After the chicks have hatched, a further saving of energy is realized, because then the chick density during the initial rearing phase in the hatcher arrangement, that is to say, the number of chicks per unit of volume is larger compared to the chick density in a barn of a poultry farm. This reduces the cost of heating during the initial rearing phase.

## Claims

1. A method of producing and rearing poultry, the method comprising:
- producing fertilized eggs in a parent animal rearing establishment (1;7), where the fertilized eggs are laid by parent animals, are collected and individually provided with a stamp specifying the parent animal rearing establishment (1;7),
- transporting the fertilized eggs from the parent animal rearing establishment (1;7) to a brooding establishment (3;9),
- brooding the eggs into brooding products under controlled conditions in brooding arrangements at the brooding establishment (3;9),
- transporting the brooding product from the brooding establishment to a poultry farm (11;13), and
- rearing the chicks which have hatched from the brooded eggs in a poultry farming barn of the poultry farm (11; 13),
**characterized in that** the brooding product is formed by set eggs (27) and
- **in that** the set eggs (27), after being received from the brooding establishment (3;9), are placed in a hatcher-arrangement (25;63) at the poultry farm (11;13) for the purpose of:
* the final brooding of the eggs (27) under controlled conditions,
* the hatching of the eggs (27),
* the rearing during an initial phase of the rearing period.

2. The method as claimed in claim 1, **characterized in that** the origin of the set eggs (27) coming from the brooding establishment (3;9) is verified with the aid of the stamp before the eggs (27) are placed in a hatcher arrangement (25;63) and **in that** solely eggs (27) of selected origin are placed in the hatcher arrangement (25;63).

3. The method as claimed in claim 1 or 2,
**characterized in that** feed and water is rendered available to the hatched chicks (39;65) and **in that** at a given instant during the initial rearing period the chicks (39;65) are allowed access to a barn of the poultry farm from the hatcher arrangement (25;63).

4. The method as claimed in claim 3, **characterized in that** litter (29) is spread over the floor and strips (31) of material are laid down in known manner in the barn, which strips (31) are stretched out underneath and beside one or more feed saucers (33), some feed (37) being spread out over the strips (31) of material and **in that** the hatcher arrangement (25), which has an open under side, is placed on the litter-covered floor and is placed at least partly over a strip (31) of material laid down, so that inside the hatcher arrangement (25) the hatched chicks (39) can peck feed from the strip (31) of material.

5. The method as claimed in claim 4, **characterized in that** in known manner water pipes (41) comprising drinking nipples (43) are present in the barn of the poultry farm and **in that** one or more of the water pipes (41) is/are led through the hatcher arrangement (25), so that water can be drunk through the drinking nipples (43) by the newly hatched chicks (39).

6. The method as claimed in one or more of the preceding claims, **characterized in that** the set eggs (27) are placed in the hatcher arrangement (25) with a density that is tuned to the heat generation of the eggs (27) in relation to the heat losses from the hatcher arrangement (25).

7. A hatcher arrangement (25;63) for use in the method as claimed in any of the preceding claims, comprising a plurality of walls defining a shielded hatcher space and a floor for receiving a plurality of set eggs (27),
**characterized in that** the hatcher space and the floor are dimensioned and configured such as to concurrently allow final brooding of the eggs (27) under controlled conditions, hatching of the eggs (27) and initial rearing of hatched chicks (39;65), and **in that** the hatcher arrangement (63) belongs to a movable hatching unit (61), which comprises a plurality of tiers and a plurality of hatcher arrangements (63).

8. The hatcher arrangement (25;63) as claimed in claim 7, **characterized by** means for supplying feed and water to the hatched chicks (39;65).

9. The hatcher arrangement (25;63) as claimed in claim 8, **characterized in that** the feed supply means include at least one strip (31) of chick paper arranged on the floor and over which feed (37) is scattered.

10. The hatcher arrangement (25;63) as claimed in claim 8 or 9, **characterized in that** the water supply means include at least one water pipe (41) running through the hatcher arrangement (25;63) and having drinking nipples (43).

11. The hatcher arrangement (25;63) as claimed in any one of claims 7 to 10, **characterized by** means (45;55;47-51) for heating and/or ventilating the shielded hatcher space.

12. The hatcher arrangement (25;63) as claimed in claim 7 to 11, **characterized in that** the hatcher arrangement (63) is movable on wheels (67) at the poultry farm between a location outside a barn of the poultry farm and a location inside a barn of the poultry farm.

13. A poultry farm comprising at least a poultry farming barn for rearing chicks (39;65) and comprising means for executing the method as claimed in one or more of the claims 1 to 6 **characterized by:**
- at least one hatcher arrangement (25;63) as claimed in any one of claims 7 to 12, and
- additional means selected from the following group:
* means for receiving set eggs (27) delivered by a brooding establishment (3;9), maintaining them at the right temperature, manipulating them and distributing them over one or more hatcher arrangements (25;63),
* means for checking and possibly selecting set eggs (27) based on the stamps present thereon,
* means for conditioning the climate inside the erected hatcher arrangements (25;63),
* means for dispensing feed and water to hatched chicks (39;65) in the available hatcher arrangement (25;63),
* means for allowing the hatched chicks (39;65) to enter a poultry farming barn,
* means for discharging rest material such as unhatched eggs, empty eggshells, chick down etc.,
* means for accommodating a container containing set eggs (27) delivered by a means of transport and possibly connecting it to heating means.

## Patentansprüche

1. Verfahren zum Erzeugen und Aufziehen von Geflügel, wobei das Verfahren aufweist:
- Erzeugen von befruchteten Eiern in einer Muttertieraufzuchtanlage (1:7), wobei die befruchteten Eier von Muttertieren gelegt werden, gesammelt werden und individuell mit einem Stempel versehen werden, der die Muttertierzüchteinrichtung (1; 7) spezifiziert,
- Transportieren der befruchteten Eier von der Muttertierzüchteinrichtung (1; 7) zu einer Brütanlage (3; 9),
- Brüten der Eier zu Brütprodukten unter kontrollierten Bedingungen in den Brüteinrichtungen der Brütanlage (3; 9),
- Transportieren des Brütproduktes von der Brütanlage zu einer Geflügelfarm (11; 13) und
- Aufziehen der Küken, die aus den gebrüteten Eiern in einem Geflügelfarmstall der Geflügelfarm (11; 13) ausgeschlüpft sind,
**dadurch gekennzeichnet, dass** das Brütprodukt durch gelegte Eier (27) gebildet ist und
dass die gelegten Eier (27), nachdem sie von der Brutanlage (3; 9) empfangen worden sind, in einer Schlupfanlage (25; 63) in der Geflügelfarm (11; 13) platziert werden, für den Zweck:
* End-Ausbrüten der Eier (27) unter kontrollierten Bedingungen,
* Schlüpfen der Eier (27),
* Aufziehen während einer Anfangsphase der Aufzuchtperiode.

2. Verfahren nach Anspruch 1, **dadurch gekennzeichnet, dass** der Ursprung der gelegten Eier (27), die von der Brutanlage (3; 9) kommen, mit Hilfe des Stempels verifiziert wird, bevor die Eier (27) in einer Schlupfanordnung (25; 63) platziert werden, und dass nur Eier (27) eines gewählten Ursprungs in der Schlupfanlage (25; 63) platziert werden.

3. Verfahren nach Anspruch 1 oder 2, **dadurch gekennzeichnet, dass** Futter und Wasser für die geschlüpften Küken (39; 65) zur Verfügung gestellt wird und dass die Küken (39; 65) zu einem gegebenen Augenblick während der anfänglichen Aufzuchtperiode aus der Brutanlage zu einem Stall der Geflügelfarm Zutritt erhalten.

4. Verfahren nach Anspruch 3, **dadurch gekennzeichnet, dass** über den Boden Bodenstreu (29) gestreut ist und Streifen (31) aus einem Material in bekannter Weise im Stall untergelegt sind, wobei diese Streifen (31) unterhalb und neben einem oder mehreren Futterbehältern (33) ausgebreitet sind, wobei etwas Futter (37) über die Materialstreifen (31) und in der Schlupfanlage (25) verstreut wird, die eine offene untere Seite hat, welches auf dem mit Bodenstreu bedeckten Boden platziert wird und wenigstens teilweise über einem abgelegten Materialstreifen (31) platziert wird, so dass innerhalb der Schlupfanlage (25) die ausgeschlüpften Küken (39) vom Materialstreifen (31) Futter picken können.

5. Verfahren nach Anspruch 4, **dadurch gekennzeichnet, dass** in bekannter Weise Wasserleitungen (41), die Trinknippel (43) aufweisen, im Stall der Geflügelfarm vorhanden sind und dass eine oder mehrere Wasserleitungen (41) durch die Schlupfanlage (25) gelegt sind, so dass Wasser über die Trinknippel (43) von den neu ausgeschlüpften Küken (39) getrunken werden kann.

6. Verfahren nach einem oder mehreren der vorstehenden Ansprüche, **dadurch gekennzeichnet, dass** die gelegten Eier (27) in der Schlupfanlage (25) mit einer Dichte platziert sind, die auf die Wärmeerzeugung der Eier (27) in Relation zu den Wärmeverlusten der Schlupfanlage (25) abgestimmt ist.

7. Schlupfanlage (25; 63) zur Verwendung des Verfahrens wie nach einem der vorstehenden Ansprüche beansprucht, mit einer Anzahl von Wänden, die einen abgeschirmten Schlupfraum begrenzen und einem Boden zum Aufnehmen einer Anzahl von gelegten Eiern (27),
**dadurch gekennzeichnet, dass** der Schlupfraum und der Boden so dimensioniert und gestaltet sind, dass ein gleichzeitiges Ausbrüten der Eier (27) unter kontrollierten Bedingungen, Ausschlüpfen der Eier (27) und anfängliches Aufziehen der ausgeschlüpften Küken (39; 65) möglich ist und dass die Schlupfanlage (63) zu einer bewegbaren Schlupfeinheit (61) gehört, die eine Anzahl von Etagen und eine Anzahl von Schlupfanordnungen (63) hat.

8. Schlupfanlage (25; 63) nach Anspruch 7, **gekennzeichnet durch** Mittel zum Zuführen von Nahrung und Wasser zu den ausgeschlüpften Küken (39; 65).

9. Schlupfanlage (25; 63) nach Anspruch 8, **dadurch gekennzeichnet, dass** die Zuführmittel für die Nahrung wenigstens einen Streifen (31) aus Kükenpapier aufweisen, das auf dem Boden angeordnet ist, und auf welchem Nahrung (37) verstreut ist.

10. Schlupfanlage (25; 63) nach Anspruch 8 oder 9, **dadurch gekennzeichnet, dass** die Wasserversorgungsmittel wenigstens eine Wasserleitung (41) aufweisen, die durch die Schlupfanlage (25; 63) verläuft und die Trinknippel (43) hat.

11. Schlupfanlage (25; 63) nach einem der Ansprüche 7 bis 10, **gekennzeichnet durch** Mittel (45; 55; 47 - 51) zum Heizen und/oder Belüften des abgeschirmten Schlupfraums.

12. Schlupfanlage (25; 63) nach Anspruch 7 bis 11, **dadurch gekennzeichnet, dass** die Schlupfanlage (63) auf Rädern (67) in der Geflügelfarm zwischen einem Ort außerhalb eines Stalls der Geflügelfarm und einem Ort innerhalb eines Stalls der Geflügelfarm bewegbar ist.

13. Geflügelfarm mit wenigstens einem Geflügelfarmstall für die Aufzucht von Küken (39; 65) und mit Mitteln zum Durchführen des Verfahrens wie nach einem oder mehreren der Ansprüche 1 bis 6 beansprucht, **gekennzeichnet durch**:
- wenigstens eine Schlupfanlage (25; 65) wie nach einem der Ansprüche 7 bis 12 beansprucht, und
- zusätzliche Mittel, die ausgewählt sind aus der folgenden Gruppe:
* Mittel zum Aufnehmen der gelegten Eier (27), die von einer Brütanlage (3; 9) geliefert sind, Halten derselben bei der richtigen Temperatur, Behandeln und Verteilen derselben über eine oder mehrere Schlupfanlagen (25; 63),
* Mittel zum Überprüfen und der Möglichkeit des Wählens von gelegten Eiern (27) basierend auf darauf vorhandenen Stempeln,
* Mittel zum Einstellen des Klimas innerhalb der ausgerichteten Schlupfanlagen (25; 63),
* Mittel zum Ausgeben von Futter und Wasser an die geschlüpften Küken (39; 65) in der zur Verfügung stehenden Schlupfanlage (25; 63),
* Mittel, damit die geschlüpften Küken (39; 65) in einen Geflügelfarmstall eintreten können,
* Mittel zum Ausgeben von übrigem Material, wie beispielsweise nicht ausgeschlüpften Eiern, leeren Eierschalen, Kükendaunen, etc.,
* Mittel zum Aufnehmen eines Behälters, der gelegte Eier (27) enthält, die **durch** Transportmittel geliefert worden sind und möglicherweise Anschließen desselben an eine Heizeinrichtung.

## Revendications

1. Procédé de production et d'élevage de volaille, le procédé comprenant les étapes de :
- produire des oeufs fécondés dans un établissement d'élevage d'animaux parents (1 ; 7), dans lequel les oeufs fécondés sont pondus par des animaux parents, sont recueillis et munis individuellement d'une estampille spécifiant l'établissement d'élevage des animaux parents (1 ; 7),
- transporter les oeufs fécondés depuis l'établissement d'élevage d'animaux parents (1 ; 7) jusqu'à un établissement de couvaison (3 ; 9),
- couver les oeufs pour donner des produits de couvaison dans des conditions contrôlées dans des agencements de couvaison à l'établissement de couvaison (3 ; 9),
- transporter le produit de la couvaison depuis l'établissement de couvaison jusqu'à une exploitation avicole (11 ; 13), et
- élever les poussins qui sont nés des oeufs couvés dans un hangar d'exploitation avicole de l'exploitation avicole (11 ; 13),
**caractérisé en ce que** le produit de la couvaison est formé par des oeufs incubés (27) et
- **en ce que**, après avoir été reçus de l'établissement de couvaison (3 ; 9), les oeufs incubés (27) sont placés dans un agencement formant éclosoir (25 ; 63) à l'exploitation avicole (11 ; 13) en vue de :
• la couvaison finale des oeufs (27) dans des conditions contrôlées,
• l'éclosion des oeufs (27),
• l'élevage pendant une phase initiale de la période d'élevage.

2. Procédé selon la revendication 1, **caractérisé en ce que** l'origine des oeufs incubés (27) provenant de l'établissement de couvaison (3 ; 9) est vérifiée à l'aide de l'estampille avant que les oeufs (27) soient placés dans un agencement formant éclosoir (25 ; 63) et **en ce que** seuls les oeufs (27) d'origine sélectionnée sont placés dans l'agencement formant éclosoir (25 ; 63).

3. Procédé selon la revendication 1 ou 2, **caractérisé en ce que** des aliments et de l'eau sont mis à la disposition des poussins nés (39 ; 65) et **en ce que**, à un moment donné pendant la période initiale d'élevage, les poussins (39 ; 65) peuvent accéder à un hangar de l'exploitation avicole à partir de l'agencement formant éclosoir (25 ; 63).

4. Procédé selon la revendication 3, **caractérisé en ce qu'**une litière (29) est répartie sur le sol et des bandes (31) de matière sont déposées d'une manière connue dans le hangar, lesquelles bandes (31) sont étendues sous et à côté d'une ou de plusieurs mangeoires (33), des aliments (37) étant répartis sur les bandes (31) de matière et **en ce que** l'agencement formant éclosoir (25), qui comporte une face inférieure ouverte, est placé sur le sol recouvert de litière et est placé au moins en partie sur une bande (31) de matière déposée de telle sorte que, à l'intérieur de l'agencement formant éclosoir (25), les poussins nés (39) puissent picorer des aliments depuis la bande (31) de matière.

5. Procédé selon la revendication 4, **caractérisé en ce que**, d'une manière connue, des canalisations d'eau (41) comprenant des tétines (43) d'abreuvoir sont présentes dans le hangar de l'exploitation avicole et **en ce qu'**une ou plusieurs canalisations d'eau (41) est/sont amenée(s) à traverser l'agencement formant éclosoir (25), de telle sorte que l'eau puisse être bue à travers les tétines (43) par les poussins (39) qui viennent de naître.

6. Procédé selon une ou plusieurs des revendications précédentes, **caractérisé en ce que** les oeufs incubés (27) sont placés dans l'agencement formant éclosoir (25) avec une densité qui est adaptée à la génération de chaleur des oeufs (27) par rapport aux pertes de chaleur provenant de l'agencement formant éclosoir (25).

7. Agencement formant éclosoir (25 ; 63) destiné à être utilisé dans le procédé selon l'une quelconque des revendications précédentes, comprenant une pluralité de parois définissant un espace formant éclosoir protégé et un sol destiné à recevoir une pluralité d'oeufs incubés (27), **caractérisé en ce que** l'espace formant éclosoir et le sol présentent des dimensions et une configuration telles qu'elles permettent, de manière concurrente, la couvaison finale des oeufs (27) dans des conditions contrôlées, l'éclosion des oeufs (27) et l'élevage initial des poussins nés (39 ; 65), et **en ce que** l'agencement formant éclosoir (63) appartient à une unité d'éclosion mobile (61), qui comprend une pluralité d'étages et une pluralité d'agencements formant éclosoirs (63).

8. Agencement formant éclosoir (25 ; 63) selon la revendication 7, **caractérisé par** des moyens destinés à fournir des aliments et de l'eau aux poussins nés (39 ; 65).

9. Agencement formant éclosoir (25 ; 63) selon la revendication 8, **caractérisé en ce que** les moyens de fourniture d'aliments comprennent au moins une bande (31) en papier pour poussin agencée sur le sol et sur laquelle sont éparpillés des aliments (37).

10. Agencement formant éclosoir (25 ; 63) selon la revendication 8 ou 9, **caractérisé en ce que** les moyens d'alimentation en eau comprennent au moins une canalisation d'eau (41) s'étendant à travers l'agencement formant éclosoir (25 ; 63) et comportant des tétines (43) d'abreuvoir.

11. Agencement formant éclosoir (25 ; 63) selon l'une quelconque des revendications 7 à 10, **caractérisé par** des moyens (45 ; 55 ; 47 - 51) destinés à chauffer et/ou à aérer l'espace formant éclosoir protégé.

12. Agencement formant éclosoir (25 ; 63) selon l'une quelconque des revendications 7 à 11, **caractérisé en ce que** l'agencement formant éclosoir (63) peut être déplacé sur des roues (67) dans l'exploitation avicole entre un emplacement situé à l'extérieur d'un hangar de l'exploitation avicole et un emplacement situé à l'intérieur d'un hangar de l'exploitation avicole.

13. Exploitation avicole comprenant au moins un hangar d'exploitation avicole pour élever des poussins (39 ; 65) et comprenant des moyens destinés à mettre en oeuvre le procédé selon une ou plusieurs des revendications 1 à 6 **caractérisé par** :
- au moins un agencement formant éclosoir (25 ; 63) selon l'une quelconque des revendications 7 à 12, et
- des moyens supplémentaires sélectionnés parmi le groupe suivant :
• des moyens destinés à recevoir des oeufs incubés (27) distribués par un établissement de couvaison (3 ; 9), les maintenir à la bonne température, les manipuler et les répartir sur un ou plusieurs agencements formant éclosoirs (25 ; 63),
• des moyens destinés à vérifier et éventuellement à sélectionner les oeufs incubés (27) sur la base des estampilles présentes sur ces derniers,
• des moyens destinés à conditionner le climat à l'intérieur des agencements formant éclosoirs (25 ; 63) érigés,
• des moyens destinés à distribuer des aliments et de l'eau aux poussins nés (39 ; 65) dans l'agencement formant éclosoir (25 ; 63) disponible,
• des moyens destinés à permettre aux poussins nés (39 ; 65) de pénétrer dans un hangar d'exploitation avicole,
• des moyens destinés à évacuer les résidus de matière comme les oeufs non éclos, les coquilles d'oeufs vides, le duvet des poussins, etc.,
• des moyens destinés à accueillir un récipient qui contient les oeufs incubés (27) distribués par des moyens de transport et éventuellement à le relier à des moyens de chauffage.
